# EUROPEAN PATENT APPLICATION

(11) **EP 4 181 375 A1**
(43) Date of publication of application: **17.05.2023**
(21) Application number: 22205485.0
(22) Date of filing: 04.11.2022
(51) Int. Cl.: H02M 3/07, H02M 3/158, H02M 3/335

(54) **MULTILEVEL SELF BALANCE CONTROL CIRCUIT, DC DC CONVERSION SYSTEM AND AC DC CONVERSION SYSTEM**

(30) Priority: 12.11.2021 CN 202111341819
(71) Applicant: Silergy Semiconductor Technology (Hangzhou) Ltd, Zhejiang 310051 (CN)
(72) Inventor: QI, Yu, Hangzhou City, Zhejiang Province 310051 (CN); CHEN, Wei, Hangzhou City, Zhejiang Province 310051 (CN)
(74) Representative: Viering, Jentschura & Partner mbB Patent- und Rechtsanwälte

(57) **Abstract**

The present application provides a multilevel self-balance control circuit, comprising: a voltage divider unit (11) for dividing an input voltage; a voltage-controlled charge source load (12), adaptively adjusting the input charge amount based on the output voltage of the voltage divider unit, so that the total amount of charge flowing through the voltage-controlled charge source load during the period of each working state of the voltage divider unit is positively correlated with the output voltage of the voltage divider unit, and the balance control is achieved through negative feedback; a control unit (13), which controls the voltage divider unit and voltage-controlled charge source load in linkage. In the present disclosure, an active load is coupled to the output side of the voltage divider unit, and the power flowing through the active load is met positively correlated with the output power of the current voltage divider unit, and the automatic balancing of the voltage divider unit is realized by negative feedback. Simultaneously, the front-stage circuit and the rear-stage active load are controlled in linkage to reduce the need for current or voltage sampling and control, thereby saving system cost and reducing system complexity.

## Description

### BACKGROUND

### Technical Field

The present application relates to the field of circuit design, and particularly, to a multilevel self-balance control circuit, a DC-DC conversion system, and an AC-DC conversion system.

### Related Art

DC-DC converters are widely used in rail transit, electric power, energy storage, high-power transmission, and other fields. Voltage divider units are indispensable parts of a DC-DC converter. In a voltage divider unit, to ensure normal circuit operations, it is necessary to meet the balancing requirements. The balancing problems are often difficult to solve, which usually require considerable number of samples in voltage signals or current signals, with implementations of control strategies in voltage balancing. The complexity and cost of the system are therefore increased.

It is therefore a pressing problem in how to balance the voltage divider units while reducing system complexity and cost, which is currently unsolved by those skilled in the art.

### SUMMARY

In view of the shortcomings of the prior art described above, one aspect of the present application is to provide embodiments of a multilevel self-balance control circuit, a DC-DC conversion system, and an AC-DC conversion system, for solving the issues about structural complexity and prohibitive cost in implementations of conventional voltage balancing schemes of the voltage divider unit.

To achieve the above objects and other related purposes, an embodiment of the present application provides a multilevel self-balance control circuit, the multilevel self-balance control circuit may comprise at least:
a voltage divider unit (11), arranged to operably receive and divide an input voltage (Vin);
a voltage-controlled charge source load (12), coupled to an output of the voltage divider unit (11), arranged to adaptively adjust a charge input of the voltage-controlled charge source load (12) based on an output voltage (Vmid) of the voltage divider unit (11), so that a total amount of charge flowing through the voltage-controlled charge source load (12) during each duty cycle of the voltage divider unit (11) may be positively correlated with the output voltage (Vmid) of the voltage divider unit (11), causing a negative feedback loop to equalize the voltage divider unit (11); and
a control unit (13), arranged to generate a control signal to the voltage divider unit (11) and the voltage-controlled charge source load (12), jointly controlling the voltage divider unit (11) and the voltage-controlled charge source load (12).

In an alternative embodiment, the voltage divider unit (11) may be a topology structure comprising a switch and a capacitor.

In an alternative embodiment, the voltage divider unit (11) may be a flying capacitor converter.

In a further embodiment, the flying capacitor converter may comprise N-1 stages of basic modules (111) cascaded sequentially; each stage of the basic modules (111) may comprise a capacitor, a first switch and a second switch; one terminal of the first switch of a stage may be coupled to an upper plate of the capacitor of the stage, another terminal of the first switch may be coupled to an upper plate a capacitor of a previous stage, and a control terminal of the first switch may be coupled to a switch control signal; one terminal of the second switch of the stage may be coupled to a lower plate of the capacitor of the stage, another terminal of the second switch may be coupled to the lower plate of the capacitor of the previous stage, and a control terminal of the second switch may be coupled to the switch control signal; the first switch and the second switch in same stage are complementary conducted; switch control signals respectively coupled to each stage of the first switches are sequentially phase shifted with a preset angle; switch control signals respectively coupled to each stage of the second switches are sequentially phase shifted with the preset angle; and N may be a natural number greater than or equal to 3.

In a further embodiment, the voltage-controlled charge source load (12) may be a BUCK structure, a BOOST structure, or a direct current transformer-resonant circuit DCX-LLC structure.

Optionally, the control unit (13) synchronously generates control signals to the voltage-controlled charge source load (12) based on switch control signals coupled to the voltage divider unit (11).

Further optionally, the control unit (13) synchronously generates switch control signals to the voltage divider unit (11) based on control signals coupled to the voltage-controlled charge source load (12).

More alternatively, the control unit (13) controls the voltage-controlled charge source load (12) based on a critical conduction mode controlled by a constant on-time, and synchronously generates switch control signals to the voltage divider unit (11) based on control signals coupled to the voltage-controlled charge source load (12).

In an embodiment, the control unit (13) may comprise a zero-crossing detection module (131), an on-time control module (132), a trigger (133), and a voltage divider control module (134); wherein: the zero-crossing detection module (135) detects a zero-crossing point of an inductor current in the voltage-controlled charge source load (12); the on-time control module (132) may be coupled to an output of the zero-crossing detection module (131), and counts a duration of an on-time of the switch based on a difference between an output voltage of the voltage-controlled charge source load (12) and a reference voltage; the trigger (133) may comprise an input terminal coupled to outputs of the zero-crossing detection module (131) and the on-time control module (132); wherein when the inductor current crosses zero, the trigger (133) generates a main switch turn-on signal, and when the duration of the on-time reaches a preset value, the trigger (133) generates a main switch turn-off signal; and the voltage divider control module (134) may be coupled to the output terminal of the zero-crossing detection module (131), synchronously generating switch control signals to the voltage divider unit (11) based on the zero-crossing detection signal.

In a further embodiment, the control unit (13) controls the voltage-controlled charge source load (12) based on a critical conduction mode controlled by a peak current, and synchronously generates switch control signals to the voltage divider unit (11) based on control signals coupled to the voltage-controlled charge source load (12).

In a further embodiment, the control unit (13) may comprise: a zero-crossing detection module (135), a comparison module (136), a trigger (137), and a voltage divider control module (138); wherein: the zero-crossing detection module (131) detects a zero-crossing point of an inductor current in the voltage-controlled charge source load (12); the comparison module (136) compares an internal loop peak reference current with the inductor current to output a comparison result; the trigger (133) may comprise an input terminal coupled to outputs of the zero-crossing detection module (135) and the comparison module (136), generating a main switch turn-on signal when the inductor current crosses zero, and generating a main switch turn-off signal when the inductor current reaches the internal loop peak reference current; and the voltage divider control module (134) may be coupled to the output terminal of the trigger(133), and the switch control signal of the voltage divider unit (11) may be synchronously generated based on the output signal of the trigger(133).

More alternatively, the control unit (13) controls the voltage-controlled charge source load (12) based on a fixed frequency control mode, and synchronously generates switch control signals to the voltage divider unit (11) based on control signals coupled to the voltage-controlled charge source load (12).

To achieve the above objects and other related purposes, the DC-DC conversion system may comprise at least a DC power supply and a multilevel self-balance control circuit as described above; wherein the DC power supply may be coupled to an input terminal of the multilevel self-balance control circuit.

To achieve the above objects and other related purposes, the present application provides an AC-DC conversion system, the AC-DC conversion system may comprise at least an AC power supply, a rectifier circuit, and a multilevel self-balance control circuit as described above; wherein an input terminal of the rectifier circuit may be coupled to the AC power supply, and an output terminal of the rectifier may be coupled to an input terminal of the multilevel self-balance control circuit.

As described above, the embodiments of the multilevel self-balance control circuit, the DC-DC conversion system and the AC-DC conversion system reveal the following beneficial effects:

In the embodiments of the application, an active load is connected to the output side of the voltage divider unit of the multilevel self-balance control circuit, and the power flowing through the active load is positively correlated with the output power of the current voltage divider unit, and the automatic balancing of the voltage divider unit is realized by negative feedback. The front-stage circuit and the rear-stage active load are simultaneously controlled to reduce the need for current or voltage sampling and control, thereby saving system cost and reducing system complexity.

### BRIEF DESCRIPTION OF THE DRAWINGS

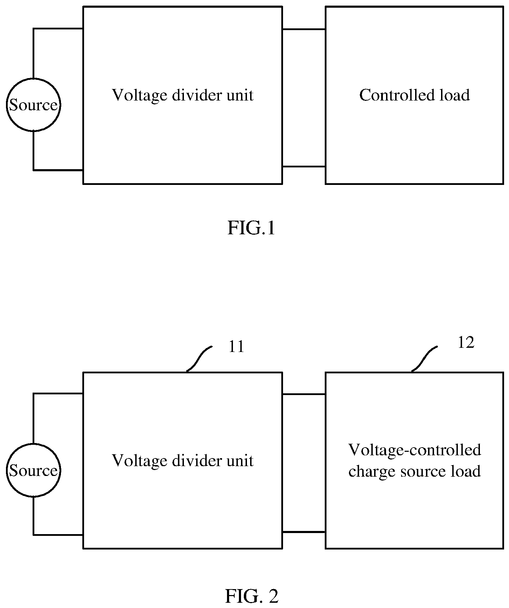

The features of the exemplary embodiments believed to be novel and the elements and/or the steps characteristic of the exemplary embodiments are set forth with particularity in the appended claims. The FIGs. 1-16 are for illustration purposes only and are not drawn to scale. The exemplary embodiments, both as to organization and method of operation, may best be understood by reference to the detailed description which follows taken in conjunction with the accompanying drawings in which:
FIG. 1 shows a schematic diagram of a multilevel self-balance control circuit, in accordance with the embodiments of the present application.
FIG. 2 shows a schematic diagram of a multilevel self-balance control circuit, in accordance with the embodiments of the present application.
FIG. 3 shows a first implementation of a multilevel self-balance control circuit, in accordance with the embodiments of the present application.
FIG. 4 shows an embodiment of the control unit, in accordance with the embodiments of the present application.
FIG. 5 shows a self-balance voltage three-level flying capacitor architecture based on the BUCK topology, in accordance with the embodiments of the present application.
FIG. 6 shows a schematic diagram of the driving waveform of the self-balance three-level flying capacitor architecture based on the BUCK topology under a condition that the rear-stage synchronizes the front stage once a cycle in the balanced state, in accordance with the embodiments of the present application.
FIG. 7 shows a schematic diagram of the driving waveform of the self-balance three-level flying capacitor architecture based on the BUCK topology under a condition that the rear-stage synchronizes the front stage once a cycle in the unbalanced state, in accordance with the embodiments of the present application.
FIG. 8 shows a second implementation of a multilevel self-balance control circuit, in accordance with the embodiments of the present application.
FIG. 9 shows another implementation of the control unit, in accordance with the embodiments of the present application.
FIG. 10 shows a self-balance three-level flying capacitor architecture based on the BOOST topology, in accordance with the embodiments of the present application.
FIG. 11 shows a schematic diagram of the driving waveform of the self-balance three-level flying capacitor architecture based on the BOOST topology under a condition that the rear-stage synchronizes the front stage once a cycle in the balanced state, in accordance with the embodiments of the present application.
FIG. 12 shows a schematic diagram of the driving waveform of the self-balance three-level flying capacitor architecture based on the BOOST topology under a condition that the rear-stage synchronizes the front stage once a cycle in the unbalanced state, in accordance with the embodiments of the present application.
FIG. 13 shows a third implementation of a multilevel self-balance control circuit, in accordance with the embodiments of the present application.
FIG. 14 shows a self-balance three-level flying capacitor architecture based on the DCX-LLC topology, in accordance with the embodiments of the present application.
FIG. 15 shows a schematic diagram of the driving waveform of the self-balance three-level flying capacitor architecture based on the DCX-LLC topology under a condition that the rear-stage synchronizes the front stage once a cycle in the unbalanced state, in accordance with the embodiments of the present application.
FIG. 16 shows a schematic diagram of the control waveform of the N-level self-balance flying capacitor architecture, in accordance with the embodiments of the present application.

### DETAILED DESCRIPTION OF THE EMBODIMENTS

The following embodiments of the present application are illustrated by specific examples, those skilled in the art may easily understand other advantages and efficacy of the present application from the content disclosed in this specification. The present application may also be implemented or applied by different specific embodiments, the details of the present specification may also be based on different views and applications, without departing from the spirit of the present application to conduct various modifications or changes.

See FIGs. 1 to 16. It should be noted that the illustrations provided in an embodiment only illustrate the basic idea of the present application in a schematic manner, so that only the components related to the present application are shown in the drawings, which are not drawn according to the number of components, shapes and sizes of the actual embodiment. The form, quantity and proportion of each component may be arbitrarily changed when actually implemented, and the component layout may also be more complex.

The present application is used to solve the balancing problem of the voltage divider unit, by connecting an active load on the output side of the voltage divider unit, and satisfying that the power flowing through the active load is positively correlated with the current power output by the front-stage circuit, and achieving the linkage control of the front-stage circuit and the rear-stage active load to achieve automatic balancing of the front-stage circuit.

As shown in FIG. 1, the front-stage circuit is a voltage divider to be balanced, the rear-stage active load is a controlled load network, and the rear-stage active load presents a negative feedback characteristic, which will automatically realize the voltage-balancing control of the front-stage circuit and realize the power change of the rear-stage active load at the same time. The front-stage circuit and the rear-stage active load are under linkage control, and the control signal can be generated by the front-stage circuit and synchronized with switches of the rear-stage active load. Conversely, control signals may also be generated from the rear-stage active load and synchronized with switches of the front-stage circuit.

Specifically, as shown in FIG. 2, when the front-stage circuit is a voltage divider unit 11, the rear-stage active load is a voltage-controlled charge source load 12. In an embodiment, the voltage divider unit 11 comprises switches and capacitors. The specific structure is not limited, and any voltage divider circuit structure implemented by a combination of switches and capacitors are suitable for the present application. The front-stage circuit and the rear-stage active load are coordinately controlled by the control unit 13 (not shown in the FIG.2) to ensure that the total amount of charge flowing through the rear-stage active load is only positively correlated with the output voltage of the current front-stage circuit within the period of each working state. That is, when the output voltage of the front-stage circuit increases, the total amount of charge flowing into the rear-stage active load is increased. Conversely, when the output voltage of the front-stage circuit decreases, the total amount of charge flowing into the rear-stage active load is decreased.

The following is a specific description of the present application based on different embodiments.

### Embodiment 1

As shown in FIGs. 2 and 3-7, a multilevel self-balance control circuit is provided, and the multilevel self-balance control circuit includes: a voltage divider unit 11, a voltage-controlled charge source load 12, and a control unit 13.

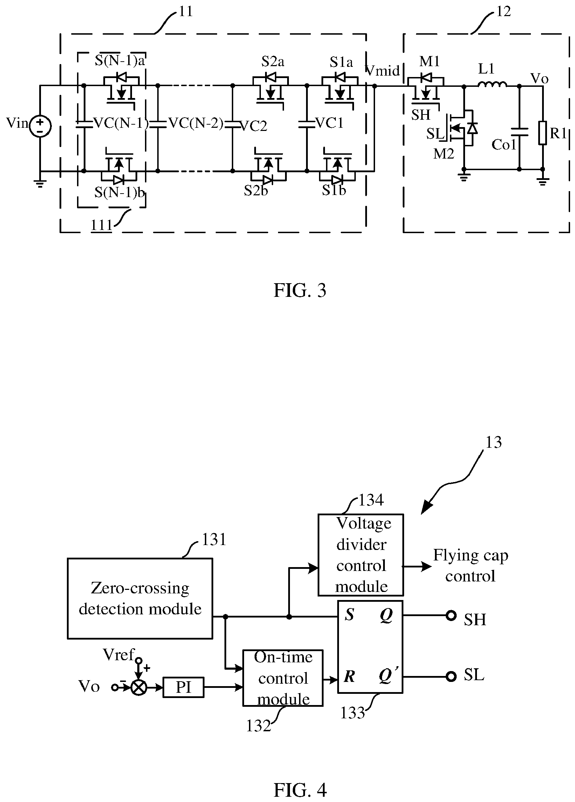

As shown in FIGs. 2 and 3, the voltage divider unit 11 receives and divides the input voltage Vin.

Specifically, as shown in FIG. 3, in an embodiment, the voltage divider unit 11 is a flying capacitor converter. The flying capacitor converter comprises N-1 stages of basic modules 111 cascaded sequentially. Each of the basic modules 111 includes a capacitor, a first switch and a second switch. One terminal of the first switch in one of the stages is coupled to the upper plate of a capacitor, and another terminal of the first switch is coupled to the upper plate of a capacitor in the previous stage. The control terminal of the first switch is coupled to a switch control signal. One terminal of the second switch of the present stage is coupled to a lower plate of the present capacitor, and the other terminal of the second switch is coupled to a lower plate of a capacitor in the previous stage. The control terminal of the second switch is coupled to the switch control signal. In an embodiment, the first switch and the second switch are implemented by metal-oxide-semiconductor (MOS) transistors. In practical applications, any device that can be used as power switches may be selected for implementation as needed. The first switch and the second switch in the same basic module are complementarily conducted. The basic modules at all stages are under phase-shifted control. That is, switch control signals for the first switches of all stages in the basic modules are successively phase shifted with a preset angle, and switch control signals for the second switches of all stages in the basic modules are in turn phase shifted with the preset angle. N is a natural number greater than or equal to 3. The voltages VC1-VC(N-1) across the capacitors in the first stage to the (N-1) th stage are respectively Vin/(N-1), 2Vin/(N-1), ... Vin. The withstand voltage of the switches in each stage of the basic module is the voltage difference between the capacitors in the adjacent two modules, that is, Vin/(N-1). Therefore, the topology of the flying capacitor converter can reduce the voltage stress of the switches, so that low-voltage components can be used to meet the application requirements of high-voltage applications. The voltage balance effect of the flying capacitor converter may significantly affect the system performance. If the voltages are poorly balanced, the stress on the MOS transistors are increased, which may cause damages and failures of the MOS transistors.

It is to be noted that any voltage divider circuit structure that requires balance control is adaptable in the aforementioned embodiments. Details are not repeated herein.

As shown in FIG. 2 and FIG. 3, the voltage-controlled charge source load 12 is coupled to the output terminal of the voltage divider unit 11. The input charge amount of the voltage-controlled charge source load 12 is adjusted based on the output voltage of the voltage divider 11 adaptively, so that the total amount of charge flowing through the voltage-controlled charge source load 12 within the period of each working state of the voltage divider unit 11 is positively correlated with the output voltage Vmid of the voltage divider unit 11. The balance control of the voltage divider unit 11 is achieved by negative feedback.

Specifically, as shown in FIG. 3, in an embodiment, the voltage-controlled charge source load 12 may be a BUCK structure. The BUCK structure comprises a first power transistor M1, a second power transistor M2, a first inductor L1, a first capacitor Co1 and a load R1. In an embodiment, each power transistor may be implemented by N-type metal oxide semiconductor (NMOS). In practical, other devices can be selected as needed correspondingly. The drain of the first power transistor M1 is coupled to the output of the voltage divider unit 11, with the gate receiving one switch control signal SH. The source of the first power transistor M1 is coupled to the drain of the second power transistor M2. The gate of the second power transistor M2 receives another switch control signal SL, with the source grounded. One terminal of the first inductor L1 is coupled to the source of the first power transistor M1 (the drain of the second power transistor M2), and the other terminal thereof is coupled to the ground via the first capacitor Co1. The load R1 is connected in parallel with the first capacitor Co1. The first power transistor M1 and the second power transistor M2 are complementarily conducted.

It should be noted that, any circuit structure capable of changing the amount of input charges based on the output voltage of the voltage divider unit 11, and thereby achieving negative feedback to meet the characteristics of the voltage-controlled charge source is adaptable to implement the aforementioned embodiment. The invention is not limited to an embodiment.

As shown in FIGs. 3 and 4, the control unit 13 generates control signals for the voltage divider unit 11 and the voltage-controlled charge source load 12, controlling the voltage divider unit 11 and the voltage-controlled charge source load 12 in linkage.

Specifically, in an embodiment, the control unit 13 controls the voltage-controlled charge source load 12 to operate in a critical conduction mode with a constant on-time (COT) control, and synchronously generates switch control signals to the voltage divider unit 11 based on control signals for the voltage-controlled charge source load 12. In an embodiment, the control unit 13 employs a dual closed-loop COT control under the critical conduction mode. Here, the critical conduction mode is a valley current mode. The control unit 13 includes: a zero-crossing detection module 131, an on-time control module 132, a trigger 133, and a voltage divider control module 134. The zero-crossing detection module 131 detects a zero-crossing point of the inductor (ex. the first inductor L1) current in the voltage-controlled charge source load 12, and generates a turn-on signal for a main switch in the voltage-controlled charge source load 12. The on-time control module 132 is coupled to the output terminal of the zero-crossing detection module 131 and receives an on-time control signal generated based on the difference between the output voltage Vo of the voltage-controlled charge source load 12, and a reference voltage Vref. In an embodiment, the output voltage Vo is acquired by a voltage outer loop, and is subtracted from the reference voltage Vref to obtain an error signal. The error signal is passed through a proportional integral (PI) compensation network to generate the on-time control signal, which represents an expected value of the duration of the on-time. The duration of the on-time is timed from the zero-crossing point of the inductor until reaching the time represented by the on-time control signal, thus, a turn-off signal for the main switch is generated. The input terminal of the trigger 133 is coupled to the output terminals of the zero-crossing detection module 131 and the on-time control module 132 to receive the turn-on signal and turn-off signal to generate the control signal. When the inductor current crosses zero, the turn-on signal for a main switch is generated. When the main switch is on, the inductor is in the energy storage state; in an embodiment, the main switch is the first power transistor M1. When the duration of on-time reaches the value represented by the on-time control signal, the turn-off signal for the main switch is generated. In the stable operation, the output voltage is constant, so the on-time is constant. In an embodiment, the trigger 133 is implemented using an RS flip-flop. The set terminal S of the RS flip-flop is coupled to the output terminal of the zero-crossing detection module 131, the reset terminal R is coupled to the output terminal of the on-time control module 132, the non-inverting output terminal Q is coupled to the gate of the first power transistor M1, generating the switch control signal SH for the first power transistor M1, and the inverting output terminal Q' is coupled to the gate of the second power transistor M2, generating the switch control signal SL for the second power transistor M2. In an embodiment, the turn-on signal for the main switch in BUCK is also a driving signal for synchronizing the front-stage flying capacitor converter. The voltage divider control module 134 is coupled to the output terminal of the zero-crossing detection module 131, synchronously generating the switch control signal for the voltage divider unit 11 based on the zero-crossing detection signal. It should be understood that the voltage divider control module 134 can also be coupled to one of the output terminals of the trigger 133. In an embodiment, the voltage divider control module 134 is implemented by a state machine.

It is to be noted that, in the embodiment, the control unit 13 is disposed in the rear-stage active load, and the front-stage control signal is synchronized by the rear-stage control signal. For example, the control unit 13 synchronously generates switch control signals to the voltage divider unit 11 based on the control signal for the voltage-controlled charge source load 12. In practice, the control unit 13 may also be disposed in the front-stage circuit. In this case, the control unit 13 in the front-stage circuit detects the output of the rear-stage circuit to adjust the duration of the on-time, and passes the signal to the rear-stage active load to control the on-time of the switch in the rear-stage active load. Since the valley current of the rear-stage active load is required to be consistent, a turn-on signal for the rear-stage active load main switch needs to be generated by the rear-stage active load itself. The turn-on signal is passed to the front-stage circuit for triggering the switching of the working state of the front-stage circuit, thereby forming switch control signals of the front-stage circuit. The fundamental principle of operation is analogous and therefore is not repeated herein. The control signals for the rear-stage active load (or front-stage circuit) can be synchronized with the control signals for the front-stage circuit (or the rear-stage active load) once per cycle, or periodically synchronized every M cycle, wherein M is a natural number greater than 1. The principle is similar and will not be repeated again.

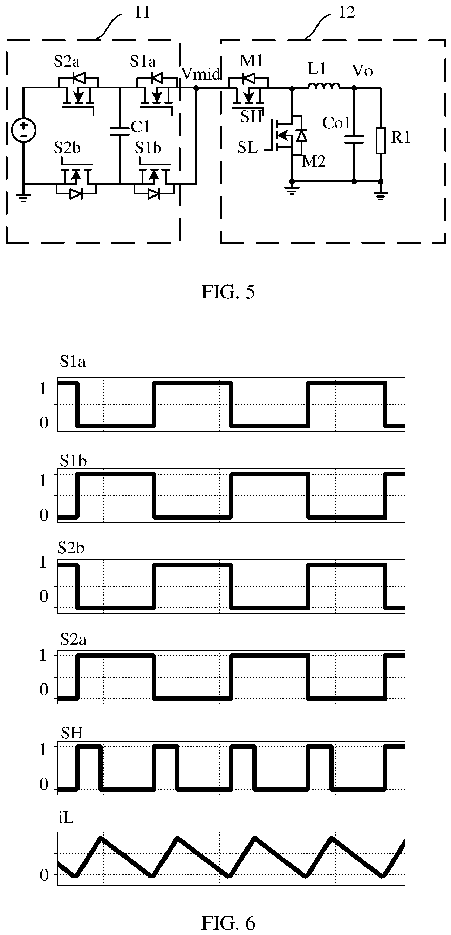

A self-voltage-balancing three-level flying capacitor architecture based on the BUCK topology, is served as an example to further illustrate the working principle of the multilevel self-balance control circuit of the present application. FIG. 5 shows a self-voltage-balancing three-level flying capacitor architecture based on the BUCK topology. FIG. 6 shows a drive waveform of a balanced state when the rear-stage active load synchronizes with the front-stage circuit once per cycle. In the carrier phase-shifted control, the switch control signal S1a and the switch control signal S1b are mutually complementary. The switch control signal S2a and the switch control signal S2b are mutually complementary. The switch control signal S1a is phase shifted from the switch control signal S2a by 180 degrees. To simplify the description, it is assumed that the duty cycles of all switches are 0.5. The switch control signals for the front-stage circuit are synchronized with the turn-on signal for the main switch in the rear-stage BUCK topology. Since the duty cycle of the flying capacitor converter is only 0.5, there are N-1 working states in the flying capacitor converter including N-1 basic modules. In this example, there are two working states for the three-level flying capacitor converter (N=3). In the case of working state 1, the switch control signal S1a and the switch control signal S2b are effective, wherein first capacitor C1 is in a discharge mode. When in working state 2, the switch control signal S1b and the switch control signal S2a are effective, and the first capacitor C1 is in a charging mode. The BUCK topology features as a voltage-controlled charge source when under both constant-on-time and valley current control. The duration of the on-time of the BUCK topology is determined by the outer loop voltage loop, and the turn-on signal is decided by a zero-crossing detection (ZCD). When the inductor current crosses zero, the turn-on signal is generated to turn on the main switch, and when the on-time reaches the expected value, a turn-off signal is generated to turn off the main switch. The three-level flying capacitor converter is synchronously triggered at the rising edge of the turn-on signal for the main switch to start the carrier phase-shifted control. That is, the three-level flying capacitor converter completes the switching of the working states once within one switching cycle of the BUCK topology. At every rising edge of the turn-on signal for the main switch, the working state of the three-level flying capacitor converter is synchronously switched.

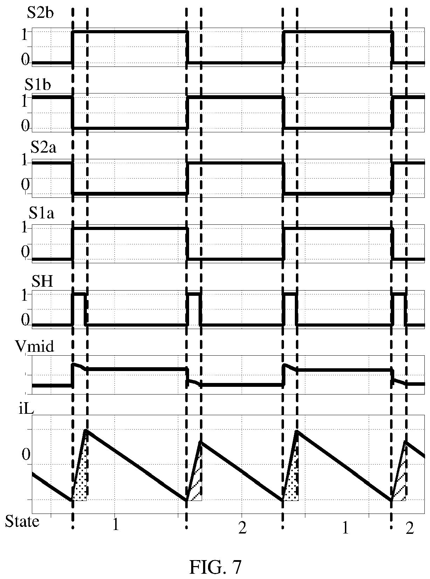

In the case that the voltage VC1 across the first capacitor C1 is unbalanced (that is, VC1 ≠ 1/2 Vin), for example, when VC1 is higher, the principle of the voltage-balancing is as follows. As shown in FIG. 7, when the first capacitor C1 is in the discharge mode (State=1, the switch control signals S2b and S1a are effective), the voltage Vmid=VC1, which is higher than the balance point. Since the output voltage is constant, the on-time is constant, and thus the discharge amount of the first capacitor C1 is increased (the area of the dotted triangle region is increased). On the other hand, when the first capacitor C1 is in the charge mode (State=2, the switch control signals S2a and S1b are effective), the voltage Vmid=Vin-VC1, which is lower than the balance point. The charges provided into the first capacitor C1 are decreased (the area of the linear triangle region is decreased). That is, when the voltage of the first capacitor C1 is higher than the balance point, the charging amount of the first capacitor C1 is less than the discharge amount. With gradually accumulation over time, the voltage of the first capacitor C1 is stabilized at the predetermined voltage level due to the negative feedback effect, thereby achieving voltage balancing. In the case that when the voltage of the first capacitor C1 is lower than the balance point, the operations are likewise, and therefore not repeated herein.

### Embodiment 2

As shown in FIG. 2 and 812, the present invention provides an embodiment of a multilevel self-balance control circuit comprising:

A voltage divider unit 11, a voltage-controlled charge source load 12, and a control unit 13.

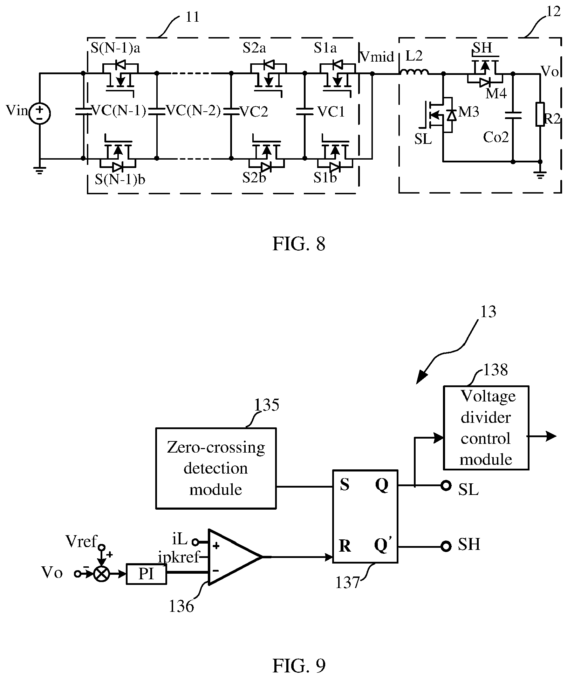

As shown in FIG. 2 and FIG. 8, the voltage divider unit 11 receives the input voltage Vin, and divides the input voltage Vin.

Specifically, the voltage divider unit 11 employs a flying capacitor converter as the embodiment 1, which is not to be repeated herein.

As shown in FIG. 2 and FIG. 8, the voltage-controlled charge source load 12 is coupled to the output terminal of the voltage divider unit 11. The amount of input charges to the voltage-controlled charge source load 12 is adjusted based on the output voltage of the voltage divider 11. Thus, the total amount of charges flowing through the voltage-controlled charge source load 12 within the period of each working state of the voltage divider unit 11 is positively correlated with the output voltage of the voltage divider unit 11, and a negative feedback loop is formed to achieve balance control of the voltage divider unit 11.

Specifically, as shown in FIG. 8 of an embodiment, the voltage-controlled charge source load 12 is a BOOST structure. The BOOST structure comprises a third power transistor M3, a fourth power transistor M4, a second inductor L2, a second capacitor Co2, and a load R2. In an embodiment, each power transistor may be implemented by NMOS. In actual, another device can be employed as needed correspondingly. One terminal of the second inductor L2 is coupled to the output terminal of the voltage divider unit 11, and the other terminal of the second inductor L2 is coupled to the drain of the third power transistor M3. The gate of the third power transistor M3 receives one switch control signal SL, whereas the source of the third power transistor is grounded. The source of the fourth power transistor M4 is coupled to the drain of the third power transistor M3, the gate of the fourth power transistor M4 receives another switch control signal SH, and the drain of the fourth power transistor M4 is coupled to the ground through the second capacitor Co2. The load R2 is connected in parallel with the second capacitor Co2. The third power transistor M3 and the fourth power transistor M4 are complementarily conducted.

It should be noted that, any circuit structure capable of changing the amount of input charges based on the output voltage of the voltage divider unit 11, and thereby achieving negative feedback to meet the characteristics of the voltage-controlled charge source is adaptable to implement the aforementioned embodiment. The invention is not limited to an embodiment.

As shown in FIGs. 8 and 9, the control unit 13 respectively generates control signals for the voltage divider unit 11 and the voltage-controlled charge source load 12, controlling the voltage divider unit 11 and the voltage-controlled charge source load 12 in linkage.

Specifically, in an embodiment, the control unit 13 controls the voltage-controlled charge source load 12 to operate in a critical conduction mode, here is, the peak current control mode, and synchronously generates switch control signals to the voltage divider unit 11 based on control signals for the voltage-controlled charge source load 12. In an embodiment, the control unit 13 employs a dual closed-loop peak current control mode. The control unit 13 includes: a zero-crossing detection module 135, a comparison module 136, a trigger 137 and a voltage divider control module 138. The zero-crossing detection module 135 detects a zero-crossing point of the current of the inductor (ex. the second inductor L2) in the voltage-controlled charge source load 12, and generates a turn-on signal for a main switch in the voltage-controlled charge source load 12. The comparison module 136 compares an internal loop peak reference current ipkref with an inductor current iL to outputs a turn-off signal for the main switch. In an embodiment, the output voltage Vo is acquired by a voltage outer loop; an error signal is obtained by subtracting the output voltage Vo from a reference voltage Vref; and the error signal is passed through a proportional integral (PI) compensation network to generate the internal loop peak reference current. The input terminal of the trigger 137 is coupled to the output terminals of the zero-crossing detection module 135 and the comparison module 136 to receive the turn-on signal and turn-off signal to generate the control signal. When the inductor current crosses zero, the turn-on signal for the main switch is generated. When the inductor current reaches the internal loop peak reference current, the turn-off signal for the main switch is generated. When the main switch is on, the inductor is in the energy storage state. In an embodiment, the main switch is shown as the third power transistor M3. In an embodiment, the trigger 137 is implemented by RS flip-flop. The set terminal S of the RS flip-flop is coupled to the output terminal of the zero-crossing detection module 135. The reset terminal R is coupled to the output terminal of the comparison module 136. The non-inverting output terminal Q is coupled to the gate of the third power transistor M3, generating the switch control signal SL for the third power transistor M3, and the inverting output terminal Q' is coupled to the gate of the fourth power transistor M4, generating the switch control signal SH for the fourth power transistor M4. The voltage divider control module 138 is coupled to the output terminal of the trigger 137 (non-inverting output terminal or inverting output terminal), synchronously generating switch control signals to the voltage divider unit 11 based on the output signals from the trigger 137. It should be understood that the voltage divider control module 138 can also be coupled to the output terminal of the zero-crossing detection module 135. In an embodiment, the voltage divider control module 138 is implemented by a state machine.

It is to be noted that the front-stage circuit may be synchronized by the rear-stage active load. On the other hand, the rear-stage active load can also be synchronized by the front-stage circuit. The synchronization may be performed once per cycle, or it can be synchronized every M cycle, wherein M is a natural number greater than 1. The principle of operation is analogous and therefore not repeated in detail.

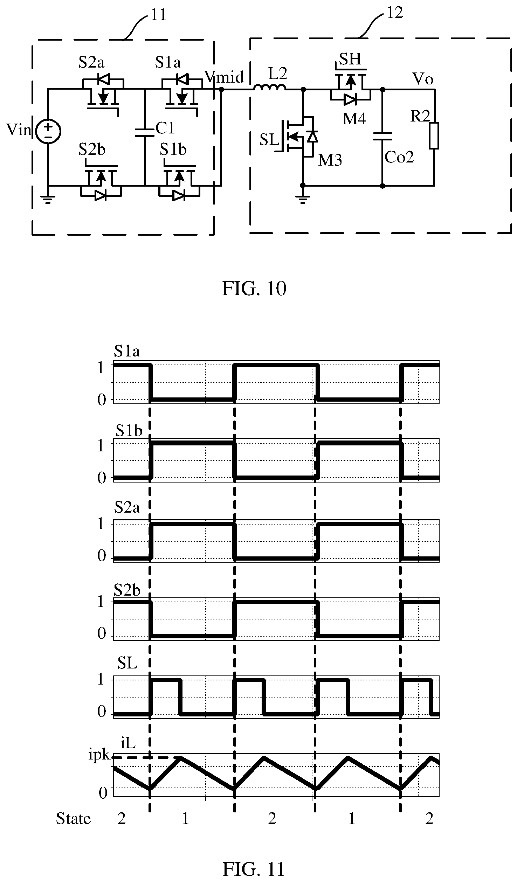

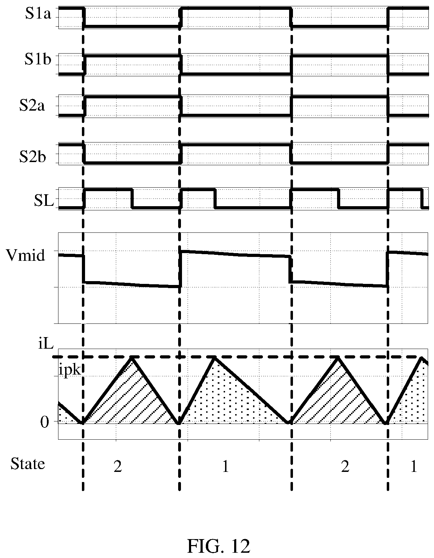

A self-voltage-balancing three-level flying capacitor architecture based on the BOOST topology is served as an example to further illustrate the working principle of the multilevel self-balance control circuit of the present application. FIG. 10 shows a self-balance three-level flying capacitor architecture based on the BOOST topology. FIG. 11 shows a drive waveform of a balanced state when the rear-stage active load synchronizes with the front-stage circuit once per cycle. When the voltage VC1 across the first capacitor C1 is balanced (i.e., VC1 = 1/2 Vin), Vmid is a constant voltage with a value of Vin/(N-1), and for a three-level flying capacitor circuit, Vmid = Vin/2. When the voltage VC1 across the first capacitor C1 is unbalanced (i.e., VC1 ≠ 1/2 Vin), automatic voltage balancing can be achieved if Vmid>1/2 Vo. As shown in FIG. 12, when VC1 is higher than a balance point, the principle of the voltage-balancing is as follows. When the first capacitor C1 is in the discharge mode (that is, switch control signals S2b and S1a are effective), the voltage Vmid=VC1 is over the balance point. According to the volt-second equilibrium of Boost topology, it can be deduced that when the voltage Vmid > 1/2 Vo, the switching period of the Boost topology gets larger. Since the peak current remains constant under the stable operation, the discharge amount of the first capacitor C1 is increased. That is, the area of the dotted triangle region is increased. On the other hand, when the first capacitor is in the charging mode (i.e., when the switch control signals S2a and S1b are effective), the voltage Vmid=Vin-VC1 is below the balance point, resulting in a decrease in the charging amount of the first capacitor C1. That is, the area of the linear triangle region is decreased. Therefore, when the voltage of the first capacitor C1 exceeds the balance point, the voltage of the first capacitor C1 eventually gets stabilized at the rated voltage due to the negative feedback effects, so as to achieve voltage balance. In the event that the voltage of the first capacitor C1 is lower than the balance point, analogous operations are proceeded, which are not repeated herein.

### Embodiment 3

As shown in FIGs. 2 and 13 -15, an embodiment provides a multilevel self-balance control circuit comprising:
a voltage divider unit 11, a voltage-controlled charge source load 12, and a control unit 13.

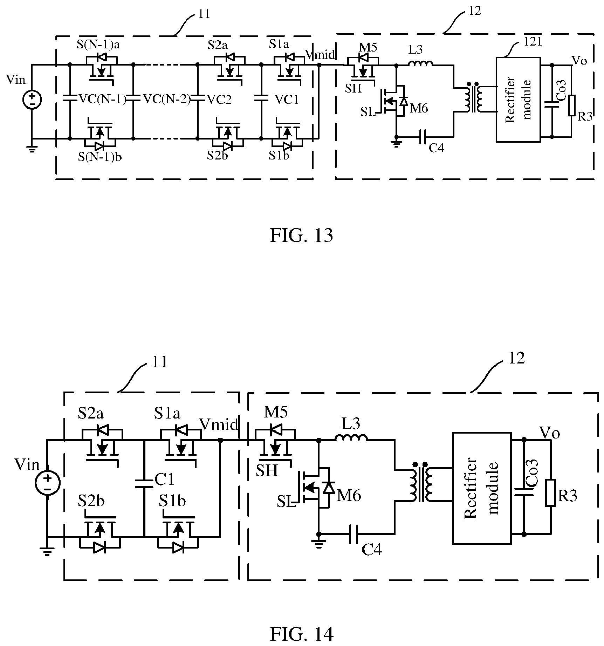

As shown in FIGs. 2 and 13, the voltage divider unit 11 receives an input voltage Vin and divides the input voltage Vin.

Specifically, the voltage divider unit 11 employs a flying capacitor converter as described in embodiment 1, therefore details are not repeated herein.

As shown in FIGs. 2 and 13, the voltage-controlled charge source load 12 is coupled to the output terminal of the voltage divider unit 11. The amount of input charges to the voltage-controlled charge source load 12 is adaptively adjusted based on the output voltage of the voltage divider unit 11. Thus, the total amount of charges flowing through the voltage-controlled charge source load 12 within the period of each working state of the voltage divider unit 11 is positively correlated with the output voltage of the voltage divider unit 11. Balance control of the voltage divider unit 11 is thereby achieved by a negative feedback loop.

Specifically, as shown in an embodiment in FIG. 13, the voltage-controlled charge source load 12 is a DCX-LLC structure (DC-DC converter based on the LLC resonant circuit). In an embodiment, the DCX-LLC structure comprises a fifth power transistor M5, a sixth power transistor M6, a third inductor L3, a third capacitor Co3, a transformer, a rectifier module 121, a fourth capacitor C4, and a load R3. In an embodiment, each power transistor may be implemented using NMOS. In practice, other devices may be employed whenever necessary. The drain of the fifth power transistor M5 is coupled to the output terminal of the voltage divider unit 11. The gate of the fifth power transistor M5 receives one switch control signal, and the source of the fifth power transistor M5 is coupled to the drain of the sixth power transistor M6. The gate of the sixth power transistor M6 receives another switch control signal, whereas the source of the sixth power transistor M6 is grounded. One terminal of the third inductor L3 is coupled to the source of the fifth power transistor M5, and the other terminal is coupled to the ground via the primary coil of the transformer and the fourth capacitor C4. The secondary coil of the transformer is coupled to the input terminal of the rectifier module 121. The third capacitor Co3 and the load R3 are connected in parallel between the two output terminals of the rectifier module 121. The fifth power transistor M5 and the sixth power transistor M6 are complementarily operated.

It should be noted that, any circuit structure capable of changing the amount of input charges based on the output voltage of the voltage divider unit 11, and thereby achieving negative feedback to meet the characteristics of the voltage-controlled charge source is adaptable to implement the aforementioned embodiment. The invention is not limited to an embodiment.

As shown in FIGs. 2 and 13, the control unit (not shown in the FIGs. 2 and 13) generates control signals for the voltage divider unit 11 and the voltage-controlled charge source load 12, controlling the voltage divider unit 11 and the voltage-controlled charge source load 12 in linkage.

Specifically, in an embodiment, the control unit 13 controls the voltage-controlled charge source load 12 under a constant frequency control mode, and synchronously generates switch control signals to the voltage divider unit 11 based on the control signals for the voltage-controlled charge source load 12. Any control circuit structure capable of achieving a fixed frequency control mode is suitable for the present application, and details thereof are omitted herein.

It is to be noted that the front-stage circuit may be synchronized by the rear-stage active load. On the other hand, the rear-stage active load can also be synchronized by the front-stage circuit. The synchronization may be performed once per cycle, or it can be synchronized every M cycle, wherein M is a natural number greater than 1. The principle of operation is analogous and therefore not repeated in detail.

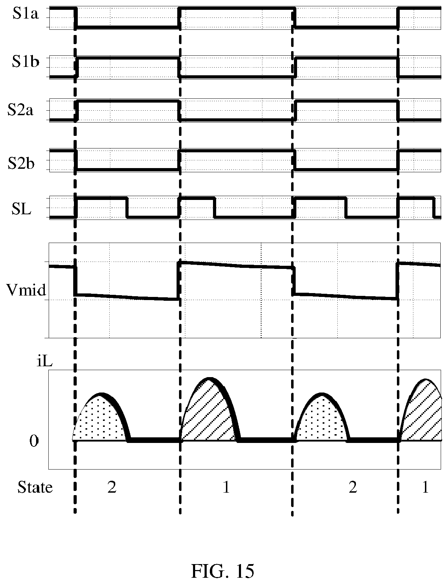

A self-voltage-balancing three-level flying capacitor architecture based on the DCX-LLC topology is served as an example to further illustrate the working principle of the multilevel self-balance control circuit of the present application. FIG. 14 shows a self-balance three-level flying capacitor architecture based on the DCX-LLC topology. For example, the voltage VC1 across the first capacitor C1 is higher, the balancing process is shown in FIG. 15. When the first capacitor C1 is in the discharge mode, the voltage Vmid=VC1 exceeds the balance point. Consequently, the rear-stage LLC resonant current increases, resulting in a higher discharge amount. That is, the area of the linear region is increased. When the first capacitor C1 is in the charging mode, the voltage Vmid=Vin-VC1 goes below the balance point. In this case, the rear-stage LLC resonant current decreases, resulting in less charging amount. That is, the area of the dot-shaped region is reduced. Eventually, a negative feedback loop is formed to achieve voltage balancing of the front-stage circuit. When the voltage of the first capacitor C1 is below the balance point, same principle of operation is applicable, and therefore the details are omitted herein.

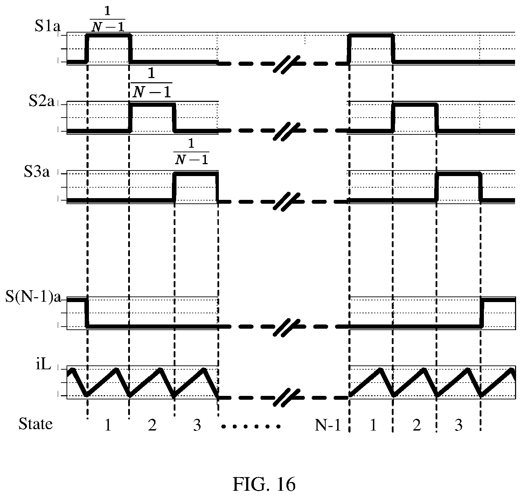

It is to be noted that, circuits in the present application are not limited to the BUCK topology, the Boost topology, or the DCX-LLC topology. The essential criteria are to meet the characteristics of the voltage-controlled charge source. The control strategy is not limited to the COT-controlled critical conduction mode, the peak-current controlled critical conduction mode, or the fixed-frequency control mode. The relationships between the topology circuits and the control strategies are not limited to the correspondences enumerated in the present application. Various implementations capable of achieving the object are adaptable. The present application does not require a complex control algorithm to achieve automatic voltage balancing of the system. The essence is to change the number of charges input to the rear-stage active load based on the output voltage Vmid of the front-stage circuit, thereby forming a negative feedback loop to balance the voltages of the capacitors in the front-stage circuit. Regarding a more general N-level self-voltage-balancing flying capacitor architecture, the control waveform is shown in FIG. 16. The front-stage circuit has a total of N-1 different working states. The turn-on signal of the rear-stage BUCK topology is used to synchronize the switching of the working states of the front-stage circuit. In another embodiment, the turn-on signal of the rear-stage active load can be used to synchronize the front-stage circuit once every N cycles. Specific examples are not repeated herein.

### Embodiment 4

An embodiment provides a DC-DC conversion system. The DC-DC conversion system at least comprises a DC power supply and a multilevel self-balance control circuit as described in the embodiments 1, 2, 3, or 4. The DC power supply is coupled to the input of the multilevel self-balance control circuit. Another embodiment further provides an AC-DC conversion system. The AC-DC conversion system at least comprises an AC power supply, a rectifier circuit and a multilevel self-balance control circuit according to the embodiments 1, 2, 3, or 4. The input terminal of the rectifier circuit is coupled to the AC power supply, and the output is coupled to the input terminal of the multilevel self-balance control circuit.

In summary, the present application provides a multilevel self-balance control circuit, a DC-DC conversion system, and an AC-DC conversion system. The multilevel self-balance control circuit includes: a voltage divider unit, which receives and divides an input voltage; a voltage-controlled charge source load, connected to the output terminal of the voltage divider unit, adaptively adjusting the number of charges input to the voltage-controlled charge source load based on the output voltage of the voltage divider unit. Thus, a total amount of charges flowing through the voltage-controlled charge source load during the period of each working state of the voltage divider unit is positively correlated with the output voltage of the voltage divider unit, and the balance control of the voltage divider unit is thereby realized by a negative feedback loop. The multilevel self-balance control circuit further includes the control unit, which generates the control signals for the voltage divider unit and the voltage-controlled charge source load, controls the voltage divider unit and the voltage-controlled charge source load in linkage. In the multilevel self-balance control circuit, an active load is coupled to the output side of the voltage divider unit, and the power flowing through the active load is positively correlated with the output power of the current voltage divider unit. Thus, automatic balancing of the voltage divider unit is realized by a negative feedback loop. The front-stage circuit and the rear-stage active load are simultaneously controlled to reduce the need for current or voltage sampling and control, thereby saving system cost and reducing system complexity. Thus, the present application effectively overcomes various shortcomings in the prior art and has a high industrial utilization value.

The above embodiments illustrate only the principles of the present application and its efficacy and are not intended to limit the present application. Any person familiar with this technique may modify or change the above embodiments without violating the spirit and scope of the present application. Accordingly, all equivalent modifications or alterations made by those who have ordinary knowledge in the technical field without departing from the spirit and technical ideas revealed in the present application shall still be covered by the claims of the present application.

## Claims

1. A multilevel self-balance control circuit, comprising:
a voltage divider unit (11), configured to receive and divide an input voltage (Vin);
a voltage-controlled charge source load (12), coupled to an output terminal of the voltage divider unit (11), and being configured to adaptively adjust charge amount input to the voltage-controlled charge source load (12) based on an output voltage (Vmid) of the voltage divider unit (11), so that a total amount of charges flowing through the voltage-controlled charge source load (12) during a period of each working state of the voltage divider unit (11) is positively correlated with the output voltage (Vmid) of the voltage divider unit (11), thereby forming a negative feedback loop to achieve voltage balancing of the voltage divider unit (11); and
a control unit (13), configured to generate control signals for the voltage divider unit (11) and the voltage-controlled charge source load (12), thereby coordinately controlling the voltage divider unit (11) and the voltage-controlled charge source load (12).

2. The multilevel self-balance control circuit according to claim 1, wherein a structure of the voltage divider unit (11) is a topology comprising switches and at least one capacitor.

3. The multilevel self-balance control circuit according to claim 1 or 2, wherein the voltage divider unit (11) is a flying capacitor converter comprising N-1 stages of basic modules (111) cascaded sequentially; wherein
each stage of the basic modules (111) comprises a capacitor, a first switch and a second switch;
one terminal of the first switch of one stage is coupled to an upper plate of the capacitor of the stage, another terminal of the first switch is coupled to an upper plate a capacitor of a previous stage;
one terminal of the second switch of the stage is coupled to a lower plate of the capacitor of the stage, another terminal of the second switch is coupled to the lower plate of the capacitor of the previous stage;
the first switch and the second switch in same stage are turned on and off in a complementary manner; and
the first switches of each stage are sequentially under phase-shifted control with a preset angle;
wherein N is a natural number greater than or equal to 3.

4. The multilevel self-balance control circuit according to any one of claims 1 to 3, wherein the voltage-controlled charge source load (12) is a BUCK circuit, a BOOST circuit, or a DCX (DC transformer)-LLC resonant circuit.

5. The multilevel self-balance control circuit according to any one of claims 1 to 4, wherein the control unit (13) synchronously generates switch control signals for the voltage divider unit (11) based on control signals for the voltage-controlled charge source load (12).

6. The multilevel self-balance control circuit according to claim 5, wherein the control unit (13) controls the voltage-controlled charge source load (12) under a critical conduction mode based on a constant on-time control, and synchronously generates the switch control signals for the voltage divider unit (11) based on the control signals for the voltage-controlled charge source load (12).

7. The multilevel self-balance control circuit according to claim 5 or 6, wherein the control unit (13) is configured to control a main switch in the voltage-controlled charge source load (12) to be turned on when an inductor current of the voltage-controlled charge source load (12) crosses zero, and to be turned off when a period of an on-time of the main switch reaches an expected value, wherein the expected value is generated based on a difference between an output voltage of the voltage-controlled charge source load (12) and a reference voltage.

8. The multilevel self-balance control circuit according to claim 7, wherein switching states of the switches in the voltage divider unit (11) are triggered to be switched according to turn-on moments of the main switch, thereby switching working states of the voltage divider unit (11).

9. The multilevel self-balance control circuit according to claim 8, wherein the working states of the voltage divider unit (11) are switched at the turn-on moment of the main switch every M duty cycles, wherein M is a positive integer.

10. The multilevel self-balance control circuit according to any one of claim 7 to 9, wherein the control unit (13) comprises:
a zero-crossing detection module (135), configured to detect a zero-crossing point of the inductor current of the voltage-controlled charge source load (12) to generate the turn-on signal;
an on-time control module (132), coupled to an output terminal of the zero-crossing detection module (131), and being configured to time the duration of the on-time of the main switch in the voltage-controlled charge source load (12) and generate the turn-off signal when the duration of the on-time of the main switch reaches the expected value;
a trigger (133), configured to receive the turn-on signal and the turn-off signal to generate the control signals for the voltage-controlled charge source load (12).

11. The multilevel self-balance control circuit according to claim 10, further comprising: a voltage divider control module (134), coupled to the output terminal of the zero-crossing detection module (131) or an output terminal of the trigger (133), and being configured to control the voltage divider unit (11) to switch the working states according to the turn-on signal for the main switch.

12. The multilevel self-balance control circuit according to claim 5, wherein the control unit (13) controls the voltage-controlled charge source load (12) to operate under a critical conduction mode with a peak current control, and synchronously generates the switch control signals to the voltage divider unit (11) based on the control signals for the voltage-controlled charge source load (12).

13. The multilevel self-balance control circuit according to claim 12, wherein the control unit (13) is configured to control a main switch in the voltage-controlled charge source load (12) to be turned on when an inductor current of the voltage-controlled charge source load (12) crosses zero, and to be turned off when the inductor current reaches a peak reference current, wherein the peak reference current is generated based on a difference between an output voltage of the voltage-controlled charge source load (12) and a reference voltage.

14. The multilevel self-balance control circuit according to claim 13, wherein the control unit (13) comprises:
a zero-crossing detection module (131), configured to detect a zero-crossing point of the inductor current in the voltage-controlled charge source load (12) and generate a turn-on signal for the main switch;
a comparison module (136), configured to compare the peak reference current with the inductor current to output a turn-off signal for the main switch;
a trigger (133), configured to receive the turn-on signal and the turn-off signal to generate the control signals for the voltage-controlled charge source load (12).

15. The multilevel self-balance control circuit according to claim 14, wherein the control unit (13) further comprises: a voltage divider control module (134), coupled to an output terminal of the trigger (133) or an output terminal of the zero-crossing detection module (131), and being configured to control working states of the voltage divider unit (11) to be switched according to the turn-on signal for the main switch.

16. The multilevel self-balance control circuit according to claim 5, wherein the control unit (13) controls the voltage-controlled charge source load (12) based on a fixed frequency control mode, and synchronously generates switch control signals to the voltage divider unit (11) based on control signals coupled to the voltage-controlled charge source load (12).

17. The multilevel self-balance control circuit according to any one of claims 1 to 16, wherein an input terminal of the multilevel self-balance control circuit receives a DC power supply or receives an AC power supply via a rectify circuit.

18. A DC-DC conversion system, **characterized in that**, the DC-DC conversion system comprises at least a DC power supply and a multilevel self-balance control circuit as claimed in any one of claims 1-17; wherein the DC power supply is coupled to an input terminal of the multilevel self-balance control circuit.

19. An AC-DC conversion system, **characterized in that**, the AC-DC conversion system comprises at least an AC power supply, a rectifier circuit, and a multilevel self-balance control circuit as claimed in any one of claims 1-16; wherein an input terminal of the rectifier circuit is coupled to the AC power supply, and an output terminal of the rectifier is coupled to an input terminal of the multilevel self-balance control circuit.
